# EUROPEAN PATENT APPLICATION

(11) **EP 4 344 834 A1**
(43) Date of publication of application: **03.04.2024**
(21) Application number: 23200696.5
(22) Date of filing: 29.09.2023
(51) Int. Cl.: B25J 9/16

(54) **AUTOMATED WORKPIECE TRANSFER SYSTEMS AND METHODS OF IMPLEMENTING THEREOF**

(30) Priority: 30.09.2022 US 202263411978 P; 20.12.2022 US 202263476344 P
(71) Applicant: ATS Corporation, Cambridge ON N3H 4R7 (CA)
(72) Inventor: AIKENS, Steve, Cambridge, N3H 4R7 (CA); STAVNITZKY, Jay, Cambridge, N3H 4R7 (CA); KLEINIKKINK, Stanley Wellington, Cambridge, N3H 4R7 (CA); ALEXANDER, Calin, Cambridge, N3H 4R7 (CA); MURRAY, Dennis, Cambridge, N3H 4R7 (CA)
(74) Representative: Brand Murray Fuller LLP

(57) **Abstract**

Automated workpiece transfer systems and methods of implementing thereof are disclosed. The system can include an imaging device operable to capture an initial image of workpieces loaded onto a loading area; an autonomous pick-and-place robot, and a processor in communication with the imaging device and the pick-and-place robot. The autonomous pick-and-place robot can include an end-of-arm-tooling component operable to retrieve pickable workpieces from the loading area and transfer the pickable workpieces to a receiving area according to a set of operating parameters. The processor can be operable to apply a machine-learning model to the initial image to identify pickable workpieces; identify a region of interest within the initial image; and based on the initial image, define the set of operating parameters for operating the end-of-arm-tooling component to retrieve the one or more pickable workpieces.

## Description

### Cross-Reference to Related Applications

This application claims priority from U.S. Provisional Patent Application No. 63/411,978, entitled "Systems and Methods for Operating a Picking Device", filed on September 30, 2022 and U.S. Provisional Patent Application No. 63/476,344, entitled "Automated Workpiece Transfer Systems and Methods of Implementing Thereof", filed on December 20, 2022.

### Field

The described embodiments relate generally to automated workpiece transfer systems and methods of implementing thereof involving applying a machine-learning model to identify pickable workpieces.

### Background

Manufacturing processes can involve processing (e.g., assembling, fabricating, treating, refining, etc.) raw materials or parts to produce products. Feeders are used within assembly lines to transfer parts or workpieces to or between processing stations for processing. Often, parts or workpieces are loaded in bulk to a feeder. Feeders can sort and divert individual parts or workpieces and feed individual workpieces to the assembly line. Furthermore, some feeders may transfer the individual workpieces to the manufacturing lines in a particular position and orientation.

### Summary

The various embodiments described herein generally relate to automated workpiece transfer systems and methods of implementing thereof. The system can include an imaging device operable to capture an initial image of one or more workpieces loaded onto a loading area; an autonomous pick-and-place robot, and a processor in communication with the imaging device and the pick-and-place robot. The autonomous pick-and-place robot can include an end-of-arm-tooling component operable to retrieve one or more pickable workpieces from the loading area and transfer the one or more pickable workpieces to a receiving area according to a set of operating parameters. The processor can be operable to apply a machine-learning model to the initial image to identify the one or more pickable workpieces from the one or more workpieces; identify a region of interest within the initial image; and based on the initial image, define the set of operating parameters for operating the end-of-arm-tooling component to retrieve the one or more pickable workpieces. The machine-learning model can be generated based on a set of training images in which one or more related workpieces were identified as pickable based on one or more of a position and an orientation of each related workpiece shown within a training image of the set of training images. The region of interest can include an engagement portion of the one or more pickable workpieces for the end-of-arm-tooling component of the pick-and-place robot to engage the one or more pickable workpieces. The set of operating parameters can include a first approach path defining a path along which the end-of-arm-tooling component moves towards the engagement portion of the one or more pickable workpieces loaded on the loading area.

In some embodiments, the processor can be operable to identify a feature of a workpiece of the one or more workpieces shown in the initial image corresponding to a pre-determined position feature; and extract position data for the workpiece based on the feature identified as corresponding to the pre-determined position feature. The position data can be representative of the position of the workpiece.

In some embodiments, the processor can be operable to identify a feature of a workpiece of the one or more workpieces shown in the initial image corresponding to a pre-determined orientation feature; and extract orientation data for the workpiece based on the feature identified as corresponding to the pre-determined orientation feature. The orientation data can be representative of the orientation of the workpiece.

In some embodiments, the set of operating parameters can further include a first retract path defining a path along which the end-of-arm-tooling component moves away from the loading area while engaged with the one or more pickable workpieces.

In some embodiments, the set of operating parameters can further include a first approach angle defining an angle at which the end-of-arm-tooling component moves towards the engagement portion of the one or more pickable workpieces.

In some embodiments, the set of operating parameters can further include a first retract angle defining an angle at which the end-of-arm-tooling component moves away from the loading area while engaged with the one or more pickable workpieces.

In some embodiments, the end-of-arm-tooling component can include a vacuum having a vacuum cup size; and the engagement portion of the one or more pickable workpieces can include a surface area that can accommodate the vacuum cup size.

In some embodiments, the end-of-arm-tooling component can include a gripper having a gripper size and a gripper stroke; and the engagement portion of the one or more pickable workpieces can include edge portions that can accommodate the gripper size and gripper stroke.

In some embodiments, the processor can be operable to determine a clear space around a workpiece of the one or more workpieces; and identify pickable workpieces further based on the clear space around the workpiece, the gripper size, and the gripper stroke.

In some embodiments, the end-of-arm-tooling component can be operable to place the one or more pickable workpieces in a desired position and a desired orientation on the receiving area; and the set of operating parameters can further include a second approach path defining a path along which the end-of-arm-tooling component with the one or more pickable workpieces engaged therein moves towards from the receiving area for placing the one or more pickable workpieces in the desired position and desired orientation.

In some embodiments, the set of operating parameters can further include a second approach angle defining an angle at which the end-of-arm-tooling component moves towards the receiving area while engaged with the one or more pickable workpieces for placing the one or more pickable workpieces in the desired position and desired orientation.

In some embodiments, the processor can be operable to select the end-of-arm-tooling component from amongst a plurality of end-of-arm-tooling components of the pick-and-place robot.

In some embodiments, the loading area can include a first loading area and a second loading area; the imaging device can be operable to capture an initial image of a first set of the one or more workpieces loaded onto the first loading area and a second image of a second set of the one or more workpieces loaded onto the second loading area; and the end-of-arm-tooling component can be operable to retrieve the one or more pickable workpieces from the first set of the one or more workpieces loaded onto the first loading area while the processor can be operated to apply the machine learning to the second image to identify one or more pickable workpieces from the second set of one or more workpieces loaded onto the second loading area.

In some embodiments, the loading area can be moveable between an imaging location and a picking location; and the loading area can be operable to remain at the imaging location while the imaging device captures the initial image and move to the picking location prior to operating the end-of-arm-tooling component to engage the one or more pickable workpieces.

In some embodiments, the loading area can include a dial.

In some embodiments, the loading area can include a conveyor.

In some embodiments, the imaging device can be operable to capture additional images of the one or more of workpieces loaded onto the loading area. For each additional image, the processor can be operable to apply the machine-learning model to the additional image to identify one pickable workpiece from the one or more workpieces; identify a region of interest within the additional image, the region of interest including an engagement portion of the one pickable workpiece; and based on the additional image, define a set of operating parameters for operating the end-of-arm-tooling component to retrieve the one pickable workpiece; and the end-of-arm-tooling component can be operable to retrieve the one pickable workpiece from the loading area and transfer the one pickable workpiece to the receiving area according to the set of operating parameters.

In some embodiments, the processor can be operable to apply the machine-learning model to the initial image to identify a plurality of pickable workpieces from the one or more workpieces; identify a region of interest within the initial image, the region of interest including an engagement portion of a first pickable workpiece for the end-of-arm-tooling component to engage the first pickable workpiece; and based on the initial image, define a first set of operating parameters for operating the end-of-arm-tooling component to retrieve the first pickable workpiece. The imaging device can be operable to capture a second image of the one or more of workpieces loaded onto the loading area after the end-of-arm-tooling component retrieves the first pickable workpiece from the loading area. The processor can be further operable to: compare the second image to the initial image to identify a second pickable workpiece in the second image corresponding to a workpiece identified as being pickable in the initial image; identify a region of interest within the second image, the region of interest including an engagement portion of the second pickable workpiece for the end-of-arm-tooling component to engage the second pickable workpiece; based on the second image, define a second set of operating parameters for operating the end-of-arm-tooling component to retrieve the second pickable workpiece. The end-of-arm-tooling component can be operable to retrieve the second pickable workpiece from the loading area and transfer the second pickable workpiece to the receiving area based on the second set of operating parameters.

In accordance with another aspect, there is generally disclosed herein methods of operating an autonomous pick-and-place robot to transfer a plurality of workpieces. The pick-and-place robot can be in communication with a processor and an imaging device. The method can involve capturing, by the imaging device, an initial image of one or more workpieces loaded onto a loading area; and operating the processor to: apply a machine-learning model to the initial image to identify one or more pickable workpieces from the one or more workpieces, identify a region of interest within the initial image; and based on the initial image, define a set of operating parameters for operating the end-of-arm-tooling component to retrieve the one or more pickable workpieces. The machine-learning model can be generated based on a set of training images in which one or more related workpieces were identified as pickable based on one or more of a position and an orientation of each related workpiece shown within a training image of the set of training images. The region of interest can include an engagement portion of the one or more pickable workpieces for an end-of-arm-tooling component of the pick-and-place robot to engage the one or more pickable workpieces. The set of operating parameters can include a first approach path defining a path along which the end-of-arm-tooling component moves towards the engagement portion of the one or more pickable workpieces loaded on the loading area. The method can further involve operating the end-of-arm-tooling component to retrieve the one or more pickable workpieces from the loading area and transfer the one or more pickable workpieces to a receiving area according to the set of operating parameters.

In some embodiments, the method can involve operating the processor to identify a feature of a workpiece of the one or more workpieces shown in the initial image corresponding to a pre-determined position feature; and extract position data for the workpiece based on the feature identified as corresponding to the pre-determined position feature. The position data being representative of the position of the workpiece.

In some embodiments, the method can involve operating the processor to identify a feature of a workpiece of the one or more workpieces shown in the initial image corresponding to a pre-determined orientation feature; and extract orientation data for the workpiece based on the feature identified as corresponding to the pre-determined orientation feature. the orientation data being representative of the orientation of the workpiece.

In some embodiments, the set of operating parameters can further include a first retract path defining a path along which the end-of-arm-tooling component moves away from the loading area while engaged with the one or more pickable workpieces.

In some embodiments, the set of operating parameters can further include a first approach angle defining an angle at which the end-of-arm-tooling component moves towards the engagement portion of the one or more pickable workpieces.

In some embodiments, the set of operating parameters can further include a first retract angle defining an angle at which the end-of-arm-tooling component moves away from the loading area while engaged with the one or more pickable workpieces.

In some embodiments, the end-of-arm-tooling component can include a vacuum having a vacuum cup size; and the engagement portion of the one or more pickable workpieces can include a surface area that can accommodate the vacuum cup size.

In some embodiments, the end-of-arm-tooling component can include a gripper having a gripper size and a gripper stroke; and the engagement portion of the one or more pickable workpieces can include edge portions that can accommodate the gripper size and gripper stroke.

In some embodiments, the method can involve operating the processor to determine a clear space around a workpiece of the one or more workpieces; and identify pickable workpieces further based on the clear space around the workpiece, the gripper size, and the gripper stroke of the gripper.

In some embodiments, the method can involve operating the end-of-arm-tooling component to place the one or more pickable workpieces in a desired position and a desired orientation on the receiving area; and the set of operating parameters can further include a second approach path defining a path along which the end-of-arm-tooling component with the one or more pickable workpieces engaged therein moves towards from the receiving area for placing the one or more pickable workpieces in the desired position and desired orientation.

In some embodiments, the set of operating parameters can further include a second approach angle defining an angle at which the end-of-arm-tooling component moves towards the receiving area while engaged with the one or more pickable workpieces for placing the one or more pickable workpieces in the desired position and desired orientation.

In some embodiments, the method can involve operating the processor to select the end-of-arm-tooling component from amongst a plurality of end-of-arm-tooling components of the pick-and-place robot.

In some embodiments, the loading area can include a first loading area and a second loading area; and the method can involve capturing, by the imaging device, an initial image of a first set of the one or more workpieces loaded onto the first loading area and a second image of a second set of the one or more workpieces loaded onto the second loading area; and operating the end-of-arm-tooling component to retrieve the one or more pickable workpieces from the first set of the one or more workpieces loaded onto the first loading area while operating the processor to apply the machine learning to the second image to identify one or more pickable workpieces from the second set of one or more workpieces loaded onto the second loading area.

In some embodiments, the loading area can be moveable between an imaging location and a picking location; and the method can involve maintaining the loading area at the imaging location while the imaging device captures the initial image and moving the loading area to the picking location prior to operating the end-of-arm-tooling component to engage the one or more pickable workpieces.

In some embodiments, the loading area can include a dial.

In some embodiments, the loading area can include a conveyor.

In some embodiments, the method can involve repeatedly: capturing an additional image of the one or more of workpieces loaded onto the loading area; operating the processor to: apply the machine-learning model to the additional image to identify one pickable workpiece from the one or more workpieces; identify a region of interest within the additional image, the region of interest including an engagement portion of the one pickable workpiece; and based on the additional image, define a set of operating parameters for operating the end-of-arm-tooling component to retrieve the one pickable workpiece; and operating the end-of-arm-tooling component to retrieve the one pickable workpiece from the loading area and transfer the one pickable workpiece to the receiving area according to the set of operating parameters.

In some embodiments, the method can involve operating the processor to: apply the machine-learning model to the initial image to identify a plurality of pickable workpieces from the one or more workpieces; identify a region of interest within the initial image, the region of interest including an engagement portion of the first pickable workpiece for the end-of-arm-tooling component to engage the first pickable workpiece; and based on the initial image, define a first set of operating parameters for operating the end-of-arm-tooling component to retrieve the first pickable workpiece. After operating the end-of-arm-tooling component to retrieve the first pickable workpiece from the loading area, the method can further involve capturing a second image of the one or more of workpieces loaded onto the loading area; and operating the processor to: compare the second image to the initial image to identify a second pickable workpiece in the second image corresponding to a workpiece identified as being pickable in the initial image; identify a region of interest within the second image, the region of interest including an engagement portion of the second pickable workpiece for the end-of-arm-tooling component to engage the second pickable workpiece; and based on the second image, define a second set of operating parameters for operating the end-of-arm-tooling component to retrieve the second pickable workpiece; and operating the end-of-arm-tooling component to retrieve the second pickable workpiece from the loading area and transfer the second pickable workpiece to the receiving area based on the second set of operating parameters.

### Brief Description of the Drawings

Several embodiments will now be described in detail with reference to the drawings, in which:
FIG. 1 is a block diagram of example components of an example automated assembly line, in accordance with an example embodiment;
FIG. 2 is a block diagram of example components of an example workpiece processing station for the assembly line of FIG. 1, in accordance with an example embodiment;
FIG. 3 is a diagram of an example workpiece processing station having an autonomous pick-and-place robot, in accordance with an example embodiment;
FIG. 4 is a diagram of an example workpiece processing station having an autonomous pick-and-place robot, in accordance with another example embodiment;
FIG. 5 is a flowchart of an example method for operating an autonomous pick-and-place robot, in accordance with an example embodiment;
FIG. 6A is a diagram of an example image of one or more workpieces, in accordance with an example embodiment;
FIG. 6B is a diagram of example image portions obtained from the image of FIG. 6A, in accordance with an example embodiment;
FIG. 7A is a diagram of an example image of an example workpiece;
FIG. 7B is a diagram of an example approach angle for the workpiece of the image of FIG. 7A;
FIG. 7C is a diagram of another example image of the workpiece of FIG. 7A; and
FIG. 7D is a diagram of an example approach angle for the workpiece of the image of FIG. 7C.

The drawings, described below, are provided for purposes of illustration, and not of limitation, of the aspects and features of various examples of embodiments described herein. For simplicity and clarity of illustration, elements shown in the drawings have not necessarily been drawn to scale. The dimensions of some of the elements may be exaggerated relative to other elements for clarity. It will be appreciated that for simplicity and clarity of illustration, where considered appropriate, reference numerals may be repeated among the drawings to indicate corresponding or analogous elements or steps.

### Description of Example Embodiments

A wide variety of feeders can be used to sort and divert or load parts to an assembly line. For example, some feeders can use vibratory, centrifugal, or pneumatic force to sort parts. However, such feeders are highly customized, purpose-built machines - tailored to the type, shape, and size of the part or workpiece that they process. As such, the engineering, procurement, and installation of such feeders can result in a significant cost and time constraint in the deployment of an automated assembly line.

Some feeders can include tooling devices that can be configured to retrieve workpieces and place the workpieces in a desired position and orientation, such as in the assembly line. Such feeders can be re-configured to process different workpieces and different desired positions and orientations. While such feeders can be multi-purposed, re-configuring such feeders can require significant manual effort. As well, such feeders can have limited processing rates - that is, the rate at which workpieces are processed.

The term "workpiece" used herein refers to a part or a partially-finished product. Parts can have different geometric properties, such as but not limited to, different types, shapes, and sizes. The terms "different parts" or "different workpieces" used herein refer to parts having such different properties and not merely a plurality of identical parts.

Disclosed herein are systems and methods for operating an autonomous pick-and-place robot. For example, the disclosed systems and methods can involve operating a processor to apply a machine-learning model to an image to identify one or more pickable workpieces; identify a region of interest within the initial image, the region of interest including an engagement portion of the one or more pickable workpieces for an end-of-arm-tooling (EOAT) component of the pick-and-place robot to engage the one or more pickable workpieces; and based on the initial image, define a set of operating parameters for operating the end-of-arm-tooling component to retrieve the one or more pickable workpieces; and operating the end-of-arm-tooling component according to the set of operating parameters. The machine-learning model can be generated based on a set of training images in which one or more related workpieces were identified as pickable based on one or more of a position and an orientation of each related workpiece shown within a training image of the set of training images.

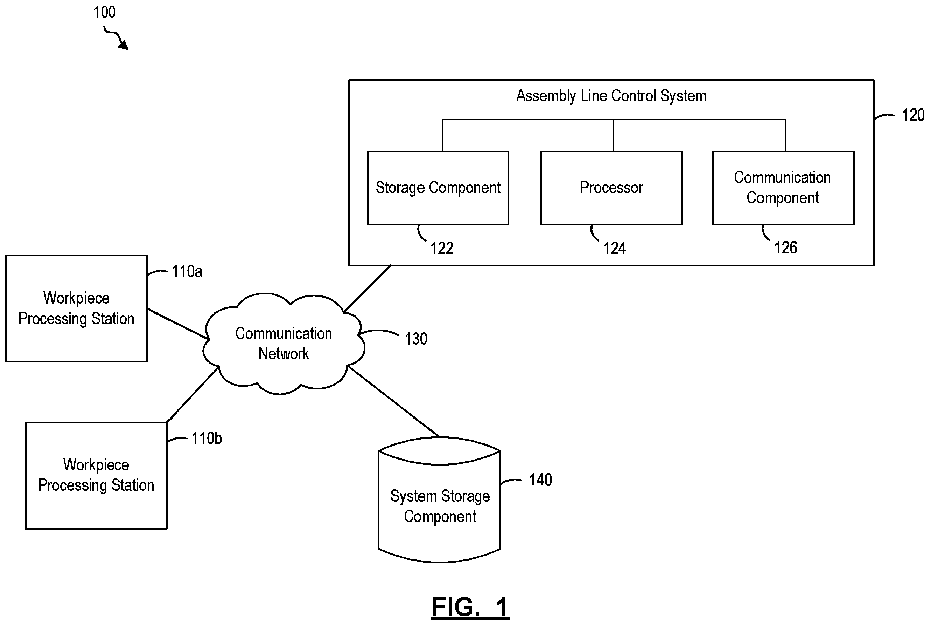

Referring now to FIG. 1, shown therein a block diagram illustrating an example automated assembly line 100. The automated assembly line 100 can include one or more workpiece processing stations 110, an assembly line control system 120, a communication network 130, and a system storage component 140. Although only two workpiece processing stations 110a, 110b are shown in FIG. 1, the automated assembly line 100 can include fewer or more workpiece processing stations 110.

The assembly line control system 120 can operate to control and/or monitor the operation of the workpiece processing stations 110. The assembly line control system 120 can include control interfaces that allow a user to electronically configure the automated assembly line 100. In some embodiments, the assembly line control system 120 can select control parameters for the workpiece processing stations 110. The control parameters can be determined by the assembly line control system 120. As shown in FIG. 1, the assembly line control system 120 includes an assembly line storage component 122, an assembly line processor 124, and an assembly line communication component 126.

The assembly line storage component 122 can include RAM, ROM, one or more hard drives, one or more flash drives or some other suitable data storage elements such as disk drives. For example, the assembly line storage component 122 can include volatile and non-volatile memory. Non-volatile memory can store computer programs consisting of computer-executable instructions, which can be loaded into the volatile memory for execution by the assembly line processor 124. Operating the assembly line processor 124 to carry out a function can involve executing instructions (e.g., a software program) that can be stored in the assembly line storage component 122 and/or transmitting or receiving inputs and outputs via the assembly line communication component 126. The assembly line storage component 122 can also store data input to, or output from, the assembly line processor 124, which can result from the course of executing the computer-executable instructions for example.

The assembly line storage component 122 can include one or more databases for storing data related to the automated assembly line 100. The assembly line storage component 122 can store data in respect of the operation of the automated assembly line 100, such as data in respect of the workpiece processing stations 110.

For example, the assembly line storage component 122 can store data received from the workpiece processing stations 110, property data in respect of each of the workpiece processing stations 110, etc. The assembly line storage component 122 can also store software applications executable by the assembly line processor 124 to facilitate communication between the assembly line control system 120 and the workpiece processing stations 110, and configuration of the workpiece processing stations 110.

In some embodiments, the assembly line storage component 122 can instead be the system storage component 140, which can be accessible via the communication network 130.

In some embodiments, the assembly line storage component 122 can store data that is more current based on the operation of the assembly line control system 120, and the system storage component 140 can store data that is considered by the assembly line control system 120 to unlikely be used in the immediate future. For example, the assembly line storage component 122 can store operating data and workpiece processing property data only for the workpiece processing stations 110 operating during a certain production run or day, whereas the system storage component 140 can store the data for all workpiece processing stations 110, which is typically infrequently changed. In some embodiments, the system storage component 140 can be a third party data storage.

The assembly line processor 124 can control the operation of the assembly line control system 120. The assembly line processor 124 can include any suitable processors, controllers, digital signal processors, graphics processing units, application specific integrated circuits (ASICs), field programmable gate arrays (FPGAs), microcontrollers, and/or other suitably programmed or programmable logic circuits that can provide sufficient processing power depending on the configuration, purposes and requirements of the assembly line control system 120. In some embodiments, the assembly line processor 124 can include more than one processor with each processor being configured to perform different dedicated tasks. The assembly line processor 124 together with the processor at the workpiece processing stations 110 contribute to the control of the automated assembly line 100.

The assembly line communication component 126 can include any interface that enables the assembly line control system 120 to communicate with various devices and other systems. For example, the assembly line communication component 126 can facilitate communication with the other components of the automated assembly line 100, such as the workpiece processing stations 110 and the system storage component 140 via the communication network 130.

In some embodiments, the assembly line communication component 126 can include at least one of a serial port, a parallel port or a USB port. The assembly line communication component 126 may also include a wireless transmitter, receiver, or transceiver for communicating with a wireless communications network, such as the communication network 130. The wireless communications network can include at least one of an Internet, Local Area Network (LAN), Ethernet, Firewire, modem, fiber, or digital subscriber line connection. Various combinations of these elements may be incorporated within the assembly line communication component 126. For example, the assembly line communication component 126 may receive input from various input devices, such as a mouse, a keyboard, a touch screen, a thumbwheel, a track-pad, a track-ball, a card-reader, voice recognition software and the like depending on the requirements and implementation of the assembly line control system 120.

The communication network 130 can include any network capable of carrying data, including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these, capable of interfacing with, and enabling communication between the assembly line control system 120, the workpiece processing stations 110, and/or the system storage component 140.

In some embodiments, the workpiece processing stations 110 can communicate with other workpiece processing stations 110 via the communication network 130. In some embodiments, the workpiece processing stations 110 can communicate with other workpiece processing stations 110 directly via onboard communication components. For example, each workpiece processing station 110 and the assembly line control system 120 may be equipped with a wireless communication interface to enable wireless communications according to a Wi-Fi protocol (e.g., IEEE 802.11 protocol or similar).

Similar to the assembly line storage component 122, the system storage component 140 can include RAM, ROM, one or more hard drives, one or more flash drives or some other suitable data storage elements such as disk drives. Similar to the assembly line storage component 122, the system storage component 140 can store data in respect of the automated assembly line 100 and/or the workpiece processing stations 110, including operating data, profile data (e.g., servo-motor profile data), motion data with which the workpiece processing stations 110 operate (e.g., tool motion data), data in respect of products that the automated production station can produce, data in respect of parts or workpieces that may be used to produce the products.

Profile data, motion data, product data, part data, and workpiece data can be stored in the system storage component 140 for subsequent retrieval by the workpiece processing stations 110. The workpiece processing stations 110 can download motion data, product data, part data, and workpiece data from the system storage component 140 via the communication network 130, for example.

Profile data and motion data can be generated for the workpiece processing stations 110. For example, tables representing the profile data and motion data of tools of the workpiece processing stations 110 can be imported and form the basis for the profile data and motion data, respectively. In another example, the assembly line control system 120 can generate the motion data based on data collected by the workpiece processing station 110.

In some embodiments, operating data can be stored in the system storage component 140, and the operating data can be retrieved by the assembly line control system 120 when needed. The assembly line control system 120 can download the operating data from the system storage component 140 via the communication network 130. Example operating data can include, but not limited to, a current position of one or more tooling of the workpiece processing station 110, a current speed of one or more tooling of the workpiece processing station 110, a current velocity of one or more tooling of the workpiece processing station 110, and a current acceleration of one or more tooling of the workpiece processing station 110. In some embodiments, the operating data, or at least some of the operating data, can be stored in the assembly line storage component 122.

In some embodiments, one or more computing devices (not shown in FIG. 1) can communicate with the automated assembly line 100 via the communication network 130. A user may electronically configure the automated assembly line 100 using the computing device. The computing device can include any device capable of communication with other devices through a network such as communication network 130. The computing device can include a processor and memory, and may be an electronic tablet device, a personal computer, workstation, server, portable computer, mobile device, personal digital assistant, laptop, smart phone, WAP phone, an interactive television, video display terminals, gaming consoles, and portable electronic devices or any combination of these.

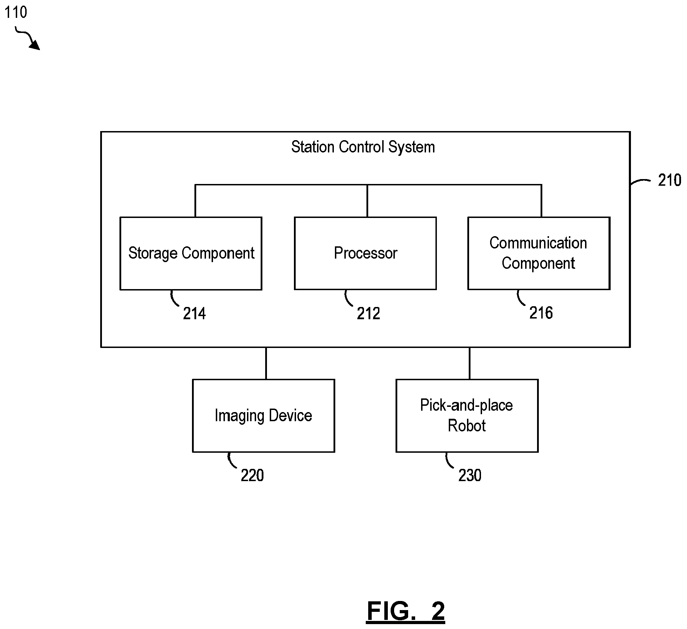

Referring now to FIG. 2, shown therein a block diagram of example components of an example workpiece processing station 110. The example workpiece processing station 110 can be workpiece processing stations 110a, 110b of the automated assembly line 100. The workpiece processing station 110 includes a station control system 210, an imaging device 220, and an autonomous pick-and-place robot 230. The station control system 210 can include a station processor 212, a storage component (or memory) 222, and a station communication component 216.

Components 210, 212, 214, 216, 220, and 230 are illustrated separately in FIG. 2. In some embodiments, one or more of the components 210, 212, 214, 216, 220, and 230 can be combined into fewer components, or separated into further components. In some embodiments, parts of a component can be combined with another part of another component.

The station control system 210 can facilitate the operation of the workpiece processing station 110. The station control system 210 can include control interfaces that allow a user to electronically configure the workpiece processing station 110. The station control system 210 can collect and store operating data of the workpiece processing station 110 in the station storage component 214.

The station processor 212 can control the operation of the workpiece processing station 110. The station processor 212 can include any suitable processors, controllers, digital signal processors, graphics processing units, application specific integrated circuits (ASICs), field programmable gate arrays (FPGAs), microcontrollers, and/or other suitably programmed or programmable logic circuits that can provide sufficient processing power depending on the configuration, purposes and requirements of the workpiece processing station 110. In some embodiments, the station processor 212 can include more than one processor with each processor being configured to perform different dedicated tasks.

The station processor 212 can operate the station storage component 214, the station communication component 216, the imaging device 220, and the pick-and-place robot 230. For example, the station processor 212 can identify pickable workpieces from an image captured by the imaging device. A pickable workpiece can be defined as a workpiece that is suitable for retrieval by the pick-and-place robot 230. Conversely, an unpickable workpiece can be defined as a workpiece that is unsuitable for retrieved by the pick-and-place robot 230. The pickability of a workpiece can relate to a degree that the workpiece is pickable. The pickability of a workpiece can be based on, but is not limited to, a position of the workpiece and/or an orientation of the workpiece. The pickability of a workpiece can also be based on additional properties of the workpiece.

The station processor 212 can operate the pick-and-place robot 230 to retrieve a workpiece that is identified as being pickable. The operation of the station processor 212 can be based on data collected from the imaging device 220, the station storage component 214, the station communication component 216, and/or the pick-and-place robot 230, in some embodiments.

The station storage component 214 can include RAM, ROM, one or more hard drives, one or more flash drives or some other suitable data storage elements such as disk drives. For example, the station storage component 214 can include volatile and non-volatile memory. Non-volatile memory can store computer programs consisting of computer-executable instructions, which can be loaded into the volatile memory for execution by the station processor 212. Operating the station processor 212 to carry out a function can involve executing instructions (e.g., a software program) that can be stored in the station storage component 214 and/or transmitting or receiving inputs and outputs via the station communication component 216. The station storage component 214 can also store data input to, or output from, the station processor 212, which can result from the course of executing the computer-executable instructions for example.

The station storage component 214 can include one or more databases for storing data related to the workpiece processing station 110. The station storage component 214 can store data to be used during the operation of the workpiece processing station 110 and/or to facilitate the operation of the workpiece processing station 110. Example data can include property and/or operating data in respect of the workpiece processing station 110, and property data in respect of parts, workpieces, or the product etc. The station storage component 214 can store data tables, data processing algorithms (e.g., image processing algorithms), as well as other data and/or operating instructions which can be used by the station processor 212. The station processor 212 can each operate to process data received from the imaging device 220 and/or the assembly line control system 120.

In some embodiments, the station storage component 214 can store data that is more current based on the operation of the workpiece processing station 110, and the system storage component 140 and/or the assembly line storage component 122 can store data that is considered by the workpiece processing station 110 to unlikely be used in the immediate future. For example, the station storage component 214 can store operating data and workpiece processing property data only for the workpiece processing station 110 operating during a certain production run or day.

The station communication component 216 can include any interface that enables the workpiece processing station 110 to communicate with various devices and other systems. For example, the station communication component 216 can facilitate communication with the other components of the automated assembly line 100, such as the assembly line control system 120, other workpiece processing stations 110 (e.g., another workpiece processing station 110 operating within the automated assembly line 100), and the system storage component 140 via the communication network 130. For example, the station communication component 216 can receive commands and/or data from the assembly line control system 120 and/or another workpiece processing station 110 (e.g., another workpiece processing station 110 operating within the automated assembly line 100).

In some embodiments, the station communication component 216 can include at least one of a serial port, a parallel port or a USB port. The station communication component 216 may also include a wireless transmitter, receiver, or transceiver for communicating with a wireless communications network, such as the communication network 130. The wireless communications network can include at least one of an Internet, Local Area Network (LAN), Ethernet, Firewire, modem, fiber, or digital subscriber line connection. Various combinations of these elements may be incorporated within the station communication component 216. For example, the station communication component 216 may receive input from various input devices, such as a mouse, a keyboard, a touch screen, a thumbwheel, a track-pad, a track-ball, a card-reader, voice recognition software and the like depending on the requirements and implementation of the workpiece processing station 110.

The imaging device 220 can capture images of a loading area. One or more workpieces can be loaded onto the loading area and the imaging device 220 can capture an image of the one or more workpieces in the loading area. For example, the imaging device 220 can include optical sensors or imaging sensors, such as photographic and/or video cameras and systems (e.g., stereo vision, high speed cameras), laser scanners, etc. Although only one imaging device 220 is shown in FIG. 2, the workpiece processing station 110 can include more imaging devices 220. In addition to imaging device 220, the workpiece processing station 110 can include other sensor devices to capture data in respect of the workpieces.

The imaging device 220 can be calibrated. For example, the lens of the imaging device 220 may introduce distortions in the image. Accordingly, the imaging device 220 can be calibrated to adjust the focus, aperture, and exposure. As well, the height of the imaging device 220 can be adjusted to adjust the scale of the image.

The workpiece processing station 110 can include one or more lighting components to provide lighting to the loading area. The lighting type and lighting intensity can be adjusted to modify the image settings.

The workpiece processing station 110 can be equipped with an autonomous pick-and-place robots 230 for engaging the workpieces, to retrieve a workpiece and transfer the workpiece. The autonomous pick-and-place robot 230 can include one or more end-of-arm-tooling components, such as but not limited to vacuums, grippers including parallel grippers, O-ring grippers, etc.., and/or electromagnets. The operation of the pick-and-place robot 230 can be controlled by the station control system 210 and with consideration of the images captured by the imaging device 220. Prior to operation of the pick-and-place robot 230, the pick-and-place robot 230 can be calibrated to align the reference frame of the pick-and-place robot 230 with the reference frame of the imaging device 220.

In addition to the one or more end-of-arm-tooling components, the workpiece processing station 110 and/or the pick-and-place robot 230 can include additional tooling components to process a workpiece. For example, additional tooling components can include purge mechanisms to remove unprocessed workpieces.

The workpiece processing station 110 can receive control parameters from the assembly line control system 120, a control interface, or an external system. Based on the control parameters, the station control system 210 can operate the workpiece processing station 110 to process workpieces.

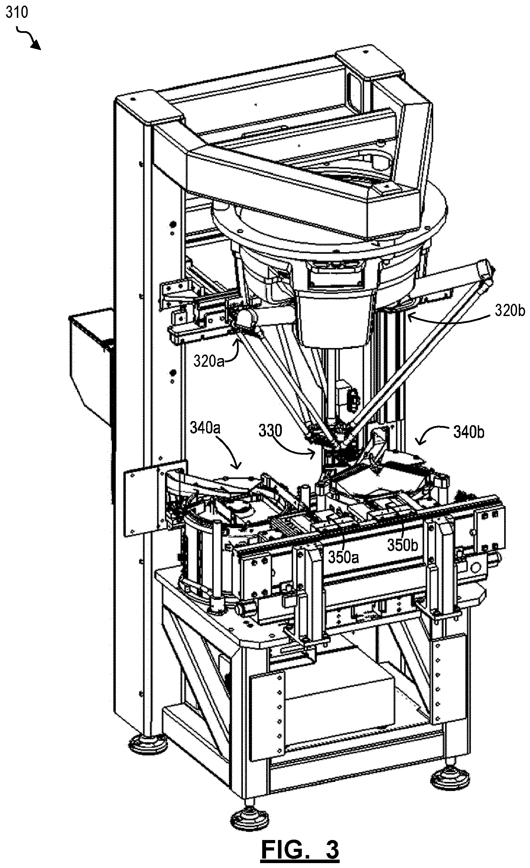

Referring now to FIG. 3, shown therein is a diagram of an example workpiece processing station 310. The workpiece processing station 310 shown in FIG. 3 can act as a feeder for retrieving workpieces from a loading area and transferring the workpieces to receiving areas 350a, 350b. The workpiece processing station 310 can include an autonomous pick-and-place robot 330, imaging devices 320a, 320b, and loading areas 340a, 340b mounted thereon. Similar to the workpiece processing station 110 of FIG. 2, the workpiece processing station 310 includes a station control system (not shown in FIG. 3).

Although only one pick-and-place robot 330 is shown in FIG. 3, the workpiece processing station 310 can include more pick-and-place robots 330. As well, although two imaging devices 320a, 320b and two loading areas 340a, 340b are shown in FIG. 3, the workpiece processing station 310 can include fewer or more imaging devices 320 and/or fewer or more loading areas 340.

Workpieces can be loaded onto each of the loading areas 340. The imaging device 320a can capture images of the loading area 340a while the imaging device 320b can capture images of the loading area 340b. The processor 212 can identify workpieces that are pickable based on the images. The processor 212 can define a set of operating parameters for operating an end-of-arm-tooling component of the pick-and-place robot 330 to retrieve workpieces from each of the loading areas 340.

In some embodiments, the pick-and-place robot 330 can include a plurality of end-of-arm-tooling components. The processor 212 can select an end-of-arm-tooling component of the plurality of end-of-arm-tooling components to use for retrieving the workpieces. For example, the processor 212 can, based on the image captured by the imaging device 320b, identify workpieces and select an appropriate end-of-arm-tooling component for retrieving the workpieces.

As shown in FIG. 3, the loading areas 340 can include, but is not limited to, dial-based feeders, bowl feeders, vibratory feeders, linear feeders or conveyors (e.g., flat bed conveyors, pallet conveyors with pocket bottoms, pallet conveyors with flat bottoms, shuttles with trays), hoppers, and/or shaker trays. The loading areas 340 can include mechanisms to sort or re-orient workpieces loaded therein until they are pickable. For example, the loading areas 340 can vibrate, spin, or blow air to re-orient workpieces loaded there-in.

The positions of the components 320a, 320b, 330, 340a, 340b of the workpiece processing station 310 is shown for illustrative purposes and are not limited to the illustrated positions. Other configurations of the components 320a, 320b, 330, 340a, 340b can be used depending on the application of the workpiece processing station 310 and/or the environment in which the workpiece processing station 310 will be used. For example, the loading areas 340 can be stacked (which offers a smaller footprint but requires a longer pick height for one loading area) or concentric (which requires a longer stroke for one loading area) instead of adjacent.

As shown in FIG. 3, the receiving areas 350 can include, but is not limited to, a conveyor (e.g., flat bed conveyors, pallet conveyors with pocket bottoms, pallet conveyors with flat bottoms, shuttles with trays). The workpieces can be transferred from the receiving areas 350 to another workpiece processing station 310 for further processing. In some embodiments, the receiving areas 350 can include one or more imaging devices to capture images of the one or more workpieces loaded onto the receiving areas 350. Although two receiving areas 350a, 350b are shown in FIG. 3, the workpiece processing station 310 can transfer workpieces to fewer or more receiving areas 350.

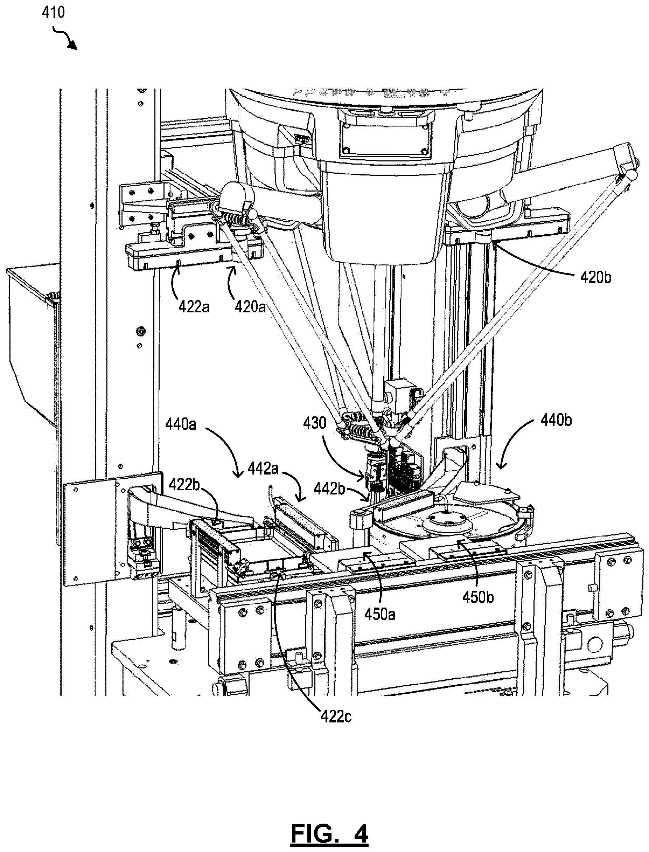

Referring now to FIG. 4, shown therein is a diagram of an example workpiece processing station 410. Similar to the workpiece processing station 310, the workpiece processing station 410 shown in FIG. 4 can act as a feeder for retrieving workpieces from a loading area and transferring the workpieces to receiving areas 450a, 450b. The workpiece processing station 410 can include an autonomous pick-and-place robot 430, imaging devices 420a, 420b, and loading areas 440a, 440b mounted thereon. Similar to the workpiece processing station 110 of FIG. 2, the workpiece processing station 410 includes a station control system (not shown in FIG. 4).

Imaging devices 420 can capture images of one or more workpieces loaded onto the loading areas 440. The workpiece processing station 410 can also include lighting components 422a, 422b, 422c. Lighting components 422 can providing lighting to the loading areas 440 to improve the image captured by the imaging devices 420. In some embodiments, the workpiece processing station 410 may not include lighting components. For example, depending on the imaging device 420, additional lighting may not improve the data captured by the imaging devices 420.

As shown in FIG. 4, the loading areas 440 can be different types. In particular, the loading area 440b includes a dial-based feeder, similar to loading areas 340. However, the loading area 440a includes a vibratory tray.

In some embodiments, unpickable workpieces can continuously remain in the loading areas 440 until they are processed. In some embodiments, unpickable workpieces can be removed from the loading areas 440 if they remain unprocessed. As shown in FIG. 4, the workpiece processing station 410 can include workpiece purge mechanisms 442 to remove unpickable workpieces.

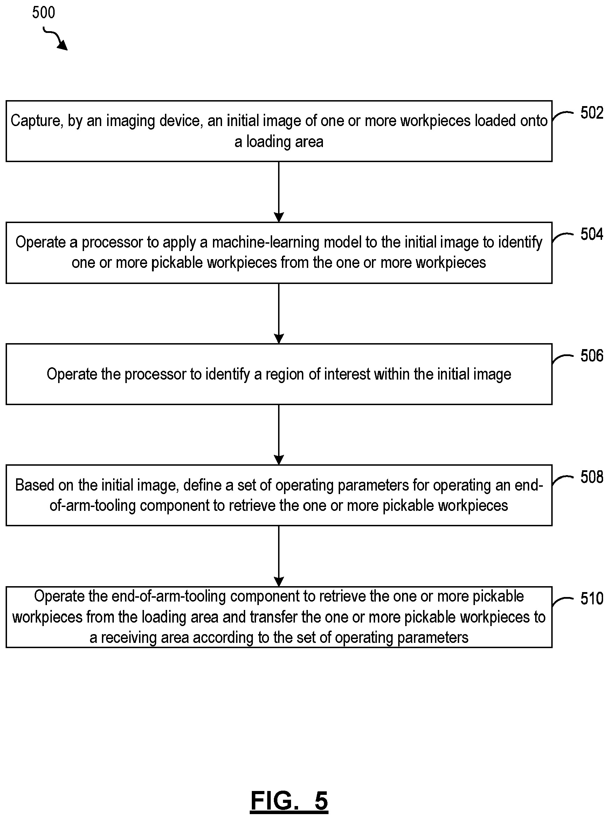

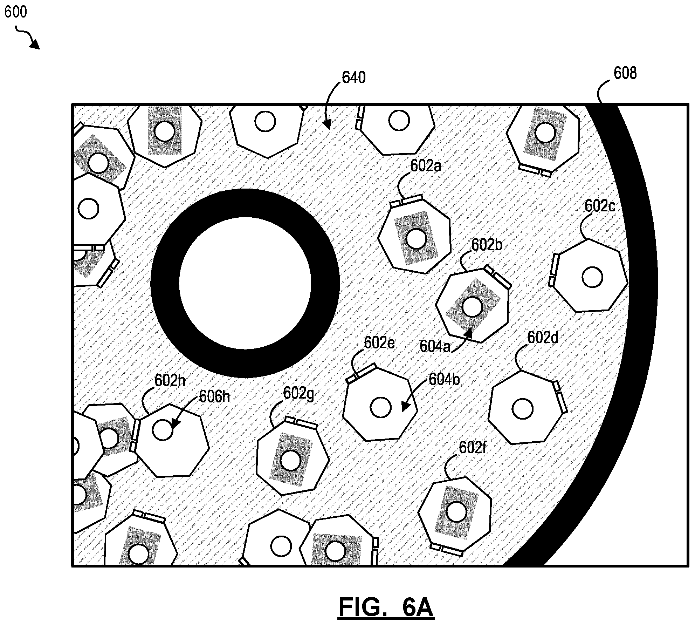

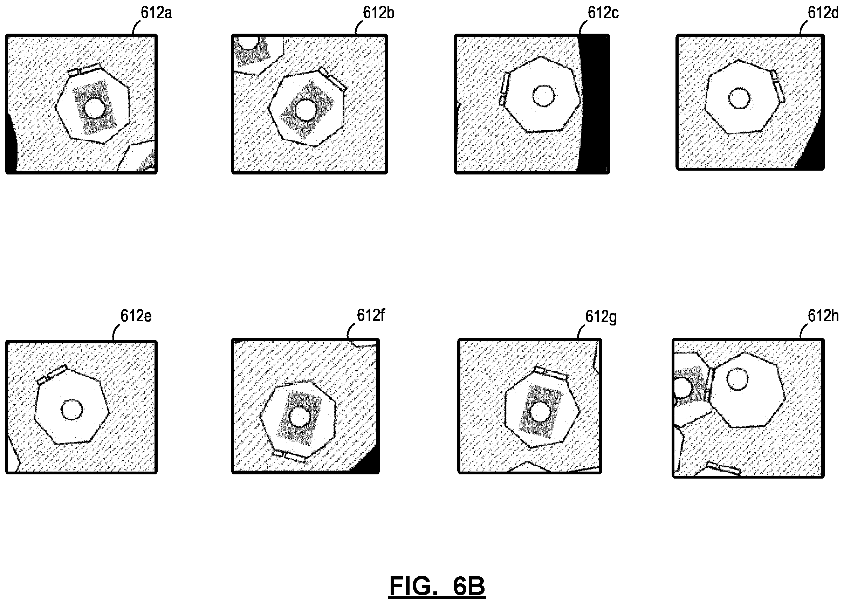

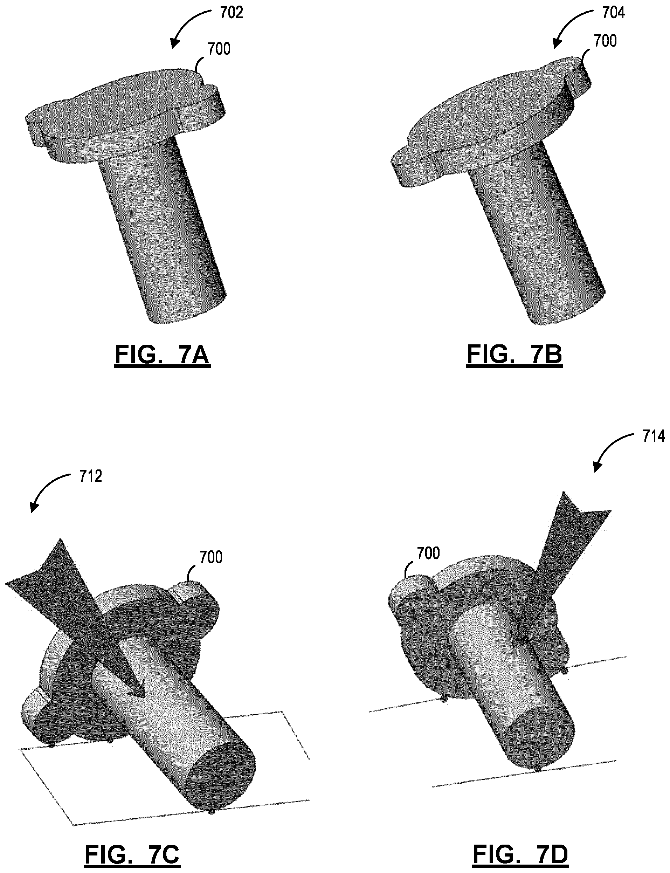

Referring now to FIG. 5, which is a flowchart of an example method 500 for operating a pick-and-place robot. To assist with the description of method 500, reference will be made simultaneously to FIGS. 6A, 6B, 7A, 7B, 7C, and 7D.

Although the following description will refer to workpiece processing station 110, the workpiece processing station can be any workpiece processing station, such as workpiece processing stations 110, 310, or 410. The workpiece processing station 110 can include a station processor, such as processor 212, an imaging device, such as imaging device 220, 320a, 320b, 420a, or 420b, and an autonomous pick-and-place robot, such as pick-and-place robot 230, 330, or 430.

At 502, the imaging device 220 captures an initial image of one or more workpieces loaded onto a loading area. An example initial image 600 is shown in FIG. 6. As can be seen in FIG. 6, one or more workpieces 602a, 602b, 602c, 602d, 602e, 602f, 602g, 602h can be loaded onto the loading area 640. The workpieces 602 are shown in FIG. 6 as being two-sided workpieces, a front side 604a and a back side 604b that is different from the front side 604a. The workpieces 602 can have different positions and orientations.

Returning now to FIG. 5, at 504, the processor 212 applies a machine-learning model to the initial image to identify one or more pickable workpieces from the one or more workpieces 602. The machine-learning model can be generated based on a set of training images in which one or more related workpieces were identified as pickable based on one or more of a position and an orientation of each workpiece shown within a training image of the set of training images.

For example, image 600 can be used as a training image to train the machine-learning model. The processor 212 can segment a plurality of image portions, such as image portions 612 of FIG. 6B, from the image 600. In some embodiments, the processor 212 can segment the image portions 612 based on pre-defined dimensions of a workpiece 602 (e.g., length and width). The pre-defined dimensions may not be the exact dimensions of the workpiece 602. The pre-defined dimensions can be an estimate of the dimensions of the workpiece 602. The pre-defined dimensions can be stored data or user input received via the station communication component 216 from an input device. In some embodiments, the processor 212 can segment the image portions by clustering workpieces 602. In some embodiments, the processor 212 can cluster the workpieces 602 based on one or more features of the workpieces 602 within an enclosed area compared to an expected area (e.g., pre-defined dimensions). The feature can be related to, but is not limited to, a portion of an area, an edge, a surface marking, or a pattern.

Each image portion 612 can be displayed at a control interface. In some embodiments, each image portion 612 can be displayed one at a time. User input can be provided to identify the image portions 612 showing workpieces 602 that are pickable.

The pickability of a workpiece 602 can be based on a position of the workpiece 602. In some embodiments, the pickability of the workpiece 602 can be based on a comparison of the position of the workpiece 602 to a desired position for a pickable workpiece. The desired position can relate to a position of the workpiece 602 relative to the loading area 640. Some areas of the loading area 640 may not be pickable due to the structure of the loading area 640 and/or the pick-and-place robot 230. For example, workpieces 602 too close to the outer portion 608 of the loading area 640 may not be pickable. For example, workpiece 602c may be positioned too close to the outer portion 608 of the loading area 640. Accordingly, workpiece 602c may be identified as being unpickable. In contrast, workpieces 602a, 602b, 602d, 602e, 602f, 602g, 602h may be identified as pickable because they are not too close to the outer portion 608 of the loading area 640.

The processor 212 can determine the position of the workpiece 602 based on a feature of the workpiece 602 (i.e., a position feature). The position feature can include but is not limited to an edge (e.g., linear edge, non-linear edge), a side, a surface marking, or a pattern. The processor 212 can apply a machine-learning model to determine the position of a workpiece 602 shown in the image 600. The machine-learning model can be generated based on a set of training images in which a region of interest of the image 600 containing the position feature is identified.

As shown in FIG. 6A, the position of workpiece 602 can be determined based on detecting the edge of the workpiece 602 having two protrusions. Given pre-defined dimensions of the workpiece 602, the processor 212 can determine that an edge opposite to the edge of the workpiece 602 having two protrusions may be too close to the outer portion 608 of the loading area 640. Thus, workpiece 602c may be identified as being unpickable.

The pickability of a workpiece 602 can be based on an orientation of the workpiece 602. The orientation of the workpiece 602 can relate to one or more of the roll (i.e., rotation around a front-to-back axis), pitch (i.e., rotation around a side-to-side axis ), or yaw (i.e., rotation around a vertical axis) of the workpiece 602. The processor 212 can determine the orientation of the workpiece 602 based on a feature of the workpiece 602 (i.e., an orientation feature). The orientation feature can include but is not limited to an edge (e.g., linear edge, non-linear edge), a side, a surface marking, or a pattern. The processor 212 can apply a machine-learning model to determine the orientation of a workpiece 602 shown in the image 600. The machine-learning model can be generated based on a set of training images in which a region of interest of the image 600 containing the orientation feature is identified.

In some embodiments, the pickability of the workpiece 602 can be based on a comparison of the orientation of the workpiece 602 to a desired orientation of a pickable workpiece. For example, the desired orientation of a pickable workpiece can involve the edge of the workpiece 602 having two protrusions being substantially on top. Workpieces 602c, 602d, and 602f are shown in image portions 612c, 612d, and 612f of FIG. 6B with the edge having two protrusions being substantially sideways (i.e., on the sides) or downwards (i.e., at the bottom). Accordingly, the processor 212 can identify workpieces 602c, 602d, and 602f as being unpickable. In contrast, the processor 212 can identify workpieces 602a, 602b, 602e, 602g, and 602h as being pickable because the edge having two protrusions is substantially upwards (i.e., at the top).

For another example, the desired orientation of a pickable workpiece can involve a back side 604b of the workpiece 602 facing upwards. Workpieces 602a, 602b, 602f, and 602g are shown in image portions 612a, 612b, 612f, and 612g of FIG. 6B with the front sides 604a facing upwards. Accordingly, the processor 212 can identify workpieces 602a, 602b, 602f, and 602g as being unpickable. In contrast, the processor 212 can identify workpieces 602c, 602d, 602e, and 602h shown in image portions 612c, 612d, 612e, and 612h as being pickable because the back sides 604b are facing upwards.

The pickability of a workpiece 602 can also be based on other properties of the workpiece 602, such as but not limited to, a clear space around the workpiece 602. In some embodiments, the pickability of the workpiece 602 can be based on a comparison of the clear space around the workpiece 602 to a desired clear space around a pickable workpiece. For example, the end-of-arm-tooling component of the pick-and-place robot 230 can include a gripper. In such cases, the gripper may require clear space around the workpiece 602 to engage the workpiece 602. Workpiece 602h is shown in image portion 612h of FIG. 6B being on top of, or overlaying a portion of another workpiece. Accordingly, the processor 212 can identify workpiece 602h as being unpickable. In contrast, the processor 212 can identify workpieces 602a, 602b, 602c, 602d, 602e, 602f, and 602g shown in image portions 612a, 612b, 612c, 612d, 612e, 612f, and 612g as being pickable because they are not in contact with any other workpieces 602.

It should be noted that the size and location of the clear space required can vary. For example, larger grippers may require more clear space than smaller grippers. As well, different grippers may not require clear space around the entire perimeter of the workpiece 602.

In some embodiments, the pickability of a workpiece 602 can also be based on whether the workpiece 602 is defective. Determination of whether the workpiece 602 is defective can be based on a comparison of features of the workpiece 602 to corresponding features of a non-defective workpiece. For example, if a feature of a workpiece 602 is dissimilar from the corresponding feature of a non-defective workpiece, the processor 212 can identify the workpiece 602 as being unpickable. Thus, pickability can provide some quality control.

As a further example, workpiece 602h is shown in image portion 612h of FIG. 6B with the opening or hole 606h being off-centered. Accordingly, the processor 212 can identify workpiece 602h as being unpickable. In contrast, the processor 212 can identify workpieces 602a, 602b, 602c, 602e, 602f, 602g, and 602h as being pickable because the opening or hole is substantially centered.

It should be noted that pickability based on a position or an orientation can also provide quality control in respect of the position feature or the orientation feature used to determine the position or orientation of the workpiece 602. For example, if a feature of a workpiece 602 corresponding to the position feature or the orientation feature of a workpiece 602 is defective, the processor 212 may not recognize that feature as the position feature or the orientation feature. As a result, the processor 212 may not determine the position or the orientation of the workpiece 602 and the processor 212 may not identify the workpiece 602 as being pickable.

Returning now to FIG. 5, at 506, the processor 212 identifies a region of interest within the initial image. The region of interest can include an engagement portion of the one or more pickable workpieces 602 for the end-of-arm-tooling component of the pick-and-place robot 230 to engage the one or more pickable workpieces 602.

Returning to the example of the end-of-arm-tooling component that includes a gripper, the processor 212 can identify an engagement portion of the one or more pickable workpieces 602 that the gripper can engage with. For example, a gripper may be an external gripper that uses a closing force to hold the workpieces 602 by exterior edges. In one example, the exterior edge of the workpiece 602 having two protrusions may not be suitable for the external gripper to engage with. Accordingly, the processor 212 can identify the exterior edges of workpieces 602 that are continuous as the engagement portions. For another example, a gripper may be an internal gripper that uses an opening force to hold the workpieces 602 by interior edges. For example, the processor 212 can identify the opening or hole of workpieces 602 as the engagement portions.

In some embodiments, the end-of-arm-tooling component of the pick-and-place robot 230 can include a vacuum. The vacuum can include a vacuum cup that engages the workpiece 602. The processor 212 can identify a surface area of the workpiece 602 that can accommodate the vacuum cup. The size of the surface area can depend on the vacuum cup size.

Returning now to FIG. 5, at 508, the processor 212 defines a set of operating parameters for operating the end-of-arm-tooling component of the pick-and-place robot 230 to retrieve the one or more pickable workpieces identified at 504.

The set of operating parameters can define the operation of the end-of-arm-tooling component of the pick-and-place robot 230. The set of operating parameters can include a first approach path. In some embodiments, the set of operating parameters can also include a first retract path. The first approach path and the first retract path can correspond to any appropriate coordinate system of the pick-and-place robot 230.

The first approach path can define a path along which the end-of-arm-tooling component moves towards the engagement portion of the one or more pickable workpieces 602 loaded on the loading area 640. The first approach path can include a path from an initial position of the end-of-arm-tooling component to an engagement position of the end-of-arm-tooling component when the end-of-arm-tooling component engages with the engagement portion of a pickable workpiece 602 loaded on the loading area 640. Thus, the approach path can be based on the position and the orientation of the pickable workpiece 602. In some embodiments, the first approach path can be defined so that movement of the end-of-arm-tooling component does not disturb or move other the workpieces 602 loaded on the loading area 640.

The first retract path can define a path along which the end-of-arm-tooling component moves away from the loading area 640 while engaged with the one or more pickable workpieces 602. The first retract path can include a path from the engagement position of the end-of-arm-tooling component when the end-of-arm-tooling component engages with the engagement portion of the pickable workpiece 602 loaded on the loading area 640 to a position in which the end-of-arm-tooling component with the pickable workpiece 602 engaged is clear of the loading area 640. In some embodiments, the first retract path can be defined so that movement of the end-of-arm-tooling component with the pickable workpiece 602 engaged does not disturb or move other unpicked workpieces 602.

In some embodiments, the set of operating parameters further include a first approach angle . The first approach angle can define an angle at which the end-of-arm-tooling component moves towards the engagement portion of the one or more pickable workpieces 602. In some embodiments, the set of operating parameters further include a first retract angle. The first retract angle can define an angle at which the end-of-arm-tooling component moves away from the loading area 640 while engaged with the one or more pickable workpieces 602.

Referring now to FIG. 7A and 7B, shown therein are two different orientations 702, 704 of an example workpiece 700. The end-of-arm-tooling component of the pick-and-place robot 230 can approach the workpiece 700 with a different angle based on the different orientations 702, 704. The pick-and-place robot 230 can approach the workpiece 700 having orientation 702 with angle 712 shown in FIG. 7C. The pick-and-place robot 230 can approach the workpiece 700 having orientation 704 with angle 714 shown in FIG. 7D.

The operation of the end-of-arm-tooling component of the pick-and-place robot 230 can also be based on a desired position and a desired orientation of the workpiece 700 transferred to the receiving area. For example, the receiving area can include a pallet in which the workpiece 700 is placed with a particular position and a particular orientation. The end-of-arm-tooling component of the pick-and-place robot 230 may rotate the workpiece 700 as moves the workpiece 700 to the receiving area and/or prior to releasing the workpiece 700 at the receiving area.

In some embodiments, the set of operating parameters can further include a second approach path defining a path along which the end-of-arm-tooling component of the pick-and-place robot 230 with the one or more pickable workpieces 700 engaged therein moves towards from the receiving area for placing the one or more pickable workpieces 700 in the desired position and desired orientation. In some embodiments, the set of operating parameters can further include a second approach angle defining an angle at which the end-of-arm-tooling component of the pick-and-place robot 230 moves towards the receiving area while engaged with the one or more pickable workpieces 700 for placing the one or more pickable workpieces 700 in the desired position and desired orientation. The second approach path can correspond to any appropriate coordinate system of the pick-and-place robot 230.

At 510, the end-of-arm-tooling component of the pick-and-place robot 230 is operated to retrieve the one or more pickable workpieces 602 from the loading area 640 and transfer the one or more pickable workpieces 602 to a receiving area based on the set of operating parameters defined at 508.

In some embodiments, the workpiece processing station 110 can include two loading areas, such loading areas 340a and 340b. The pick-and-place robot, such as pick-and-place robot 330, can pick from both loading areas 340. The pick-and-place robot 330 can pick one or more pickable workpieces from a first loading area 340a while the processor 212 applies the machine-learning model to identify one or more pickable workpieces from an image of the second loading area 340b. Systems that include multiple loading areas can be more efficient and achieve a higher processing rate in cases where the processing time of the processor 212 to identify pickable workpieces is greater than the retrieval time of the pick-and-place robot 330, that is the time required for the pick-and-place robot 330 to retrieve a pickable workpiece and transfer the pickable workpiece to the receiving area.

In some embodiments, the loading area 640 can be moveable between an imaging location and a picking location. For example, the loading area 640 can include a conveyor or a dial. The workpieces 602 can be loaded onto the loading area. The loading area can remain at the imaging location while the imaging device 220 captures images 600. After the imaging device 220 captures an image 600, the loading area, with the workpieces 602 thereon, can then move to the picking location where the end-of-arm-tooling component of the pick-and-place robot 230 retrieves the pickable workpieces 602. Systems that include an imaging location and a picking location can be more efficient and achieve a higher processing rate in cases where the processing time of the processor 212 to identify pickable workpieces is greater than the retrieval time of the pick-and-place robot 230 to retrieve a pickable workpiece and transfer the pickable workpiece to the receiving area.

In some embodiments, the processor 212 can identify a plurality of pickable workpieces within an image 600, and identify a plurality of regions of interest. For each pickable workpiece, a region of interest can include an engagement portion of the pickable workpiece for the end-of-arm-tooling component to engage the pickable workpiece. The processor 212 can, based on the initial image 600, define a plurality of sets of operating parameters for operating the pick-and-place robot 230 to retrieve the plurality of pickable workpieces. Subsequently, the end-of-arm-tooling component of the pick-and-place robot 230 can retrieve and transfer each pickable workpiece successively.

However, some pick-and-place robots 230 may inadvertently disturb unpicked workpieces 602 as they retrieve a pickable workpiece. For example, parallel grippers can disturb workpieces that are adjacent or near the workpiece 602 being retrieved. In such cases, the processor 212 can identify only one pickable workpiece within an image 600, identify a region of interest within the image 600, and define a set of operating parameters for operating the end-of-arm-tooling component to retrieve the one pickable workpiece. The pick-and-place robot 230 can retrieve and transfer the one pickable workpiece. After the pick-and-place robot 230 has retrieved the one pickable workpiece, the process can be repeated. Namely, the imaging device 220 can subsequently capture additional images 600. For each additional image 600, the processor 212 can identify one additional pickable workpiece, identify a region of interest within the additional image 600, and, based on the additional image 600, define an additional set of operating parameters for operating the end-of-arm-tooling component of the pick-and-place robot 230 to retrieve the one additional pickable workpiece.

In some embodiments, the processor 212 can identify a plurality of pickable workpieces within an initial image 600, identify a region of interest within the initial image 600. The region of interest can include an engagement portion of a first pickable workpiece of the plurality of pickable workpieces for the end-of-arm-tooling component to engage the first pickable workpiece. The processor 212 can, based on the initial image 600, define a first set of operating parameters for operating the end-of-arm-tooling component to retrieve the first pickable workpiece. After the end-of-arm-tooling component is operated to retrieve the first pickable workpiece, the imaging device 220 can subsequently capture a second image 600. The processor 212 can compare the second image 600 to the initial image 600 to identify a second pickable workpiece in the second image 600 corresponding to a workpiece identified as being pickable in the initial image 600. The processor 212 can then identify a region of interest within the second image 600 that includes an engagement portion of the second pickable workpiece for the end-of-arm-tooling component to engage the second pickable workpiece; and based on the second image 600, define a second set of operating parameters for operating the end-of-arm-tooling component to retrieve the second pickable workpiece.

It will be appreciated that numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description and the drawings are not to be considered as limiting the scope of the embodiments described herein in any way, but rather as merely describing the implementation of the various embodiments described herein.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example and without limitation, the programmable computers (referred to below as computing devices) may be a server, network appliance, embedded device, computer expansion module, a personal computer, laptop, personal data assistant, cellular telephone, smart-phone device, tablet computer, a wireless device or any other computing device capable of being configured to carry out the methods described herein.

In some embodiments, the communication interface may be a network communication interface. In embodiments in which elements are combined, the communication interface may be a software communication interface, such as those for inter-process communication (IPC). In still other embodiments, there may be a combination of communication interfaces implemented as hardware, software, and combination thereof.

Program code may be applied to input data to perform the functions described herein and to generate output information. The output information is applied to one or more output devices, in known fashion.

Each program may be implemented in a high level procedural or object oriented programming and/or scripting language, or both, to communicate with a computer system. However, the programs may be implemented in assembly or machine language, if desired. In any case, the language may be a compiled or interpreted language. Each such computer program may be stored on a storage media or a device (e.g., ROM, magnetic disk, optical disc) readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the system, processes and methods of the described embodiments are capable of being distributed in a computer program product comprising a computer readable medium that bears computer usable instructions for one or more processors. The medium may be provided in various forms, including one or more diskettes, compact disks, tapes, chips, wireline transmissions, satellite transmissions, internet transmission or downloadings, magnetic and electronic storage media, digital and analog signals, and the like. The computer useable instructions may also be in various forms, including compiled and non-compiled code.

Various embodiments have been described herein by way of example only. Various modification and variations may be made to these example embodiments without departing from the spirit and scope of the invention, which is limited only by the appended claims.

## Claims

1. A method of operating an autonomous pick-and-place robot to transfer a plurality of workpieces, the pick-and-place robot in communication with a processor and an imaging device, the method comprising:
capturing, by the imaging device, an initial image of one or more workpieces loaded onto a loading area;
operating the processor to:
apply a machine-learning model to the initial image to identify one or more pickable workpieces from the one or more workpieces, the machine-learning model being generated based on a set of training images in which one or more related workpieces were identified as pickable based on one or more of a position and an orientation of each related workpiece shown within a training image of the set of training images;
identify a region of interest within the initial image, the region of interest comprising an engagement portion of the one or more pickable workpieces for an end-of-arm-tooling component of the pick-and-place robot to engage the one or more pickable workpieces; and
based on the initial image, define a set of operating parameters for operating the end-of-arm-tooling component to retrieve the one or more pickable workpieces, the set of operating parameters comprising a first approach path defining a path along which the end-of-arm-tooling component moves towards the engagement portion of the one or more pickable workpieces loaded on the loading area; and
operating the end-of-arm-tooling component to retrieve the one or more pickable workpieces from the loading area and transfer the one or more pickable workpieces to a receiving area according to the set of operating parameters.

2. The method of claim 1 comprising:
operating the processor to:
identify a feature of a workpiece of the one or more workpieces shown in the initial image corresponding to a pre-determined position feature; and
extract position data for the workpiece based on the feature identified as corresponding to the pre-determined position feature, the position data being representative of the position of the workpiece; and/or
operating the processor to:
identify a feature of a workpiece of the one or more workpieces shown in the initial image corresponding to a pre-determined orientation feature; and
extract orientation data for the workpiece based on the feature identified as corresponding to the pre-determined orientation feature, the orientation data being representative of the orientation of the workpiece; and
optionally, the set of operating parameters further comprise a first retract path defining a path along which the end-of-arm-tooling component moves away from the loading area while engaged with the one or more pickable workpieces.

3. The method of any one of claims 1 to 2, wherein:
the set of operating parameters further comprise a first approach angle defining an angle at which the end-of-arm-tooling component moves towards the engagement portion of the one or more pickable workpieces; and
optionally, the set of operating parameters further comprise a first retract angle defining an angle at which the end-of-arm-tooling component moves away from the loading area while engaged with the one or more pickable workpieces.

4. The method of any one of claims 1 to 3, wherein:
the end-of-arm-tooling component comprises a vacuum having a vacuum cup size; and the engagement portion of the one or more pickable workpieces comprises a surface area that can accommodate the vacuum cup size.

5. The method of any one of claims 1 to 4, wherein:
the end-of-arm-tooling component comprises a gripper having a gripper size and a gripper stroke; and the engagement portion of the one or more pickable workpieces comprises edge portions that can accommodate the gripper size and gripper stroke; and
optionally, the method further comprises operating the processor to determine a clear space around a workpiece of the one or more workpieces; and identify pickable workpieces further based on the clear space around the workpiece, the gripper size, and the gripper stroke of the gripper.

6. The method of any one of claims 1 to 5, comprising operating the end-of-arm-tooling component to place the one or more pickable workpieces in a desired position and a desired orientation on the receiving area; and the set of operating parameters further comprise a second approach path defining a path along which the end-of-arm-tooling component with the one or more pickable workpieces engaged therein moves towards from the receiving area for placing the one or more pickable workpieces in the desired position and desired orientation; and
optionally, wherein the set of operating parameters further comprise a second approach angle defining an angle at which the end-of-arm-tooling component moves towards the receiving area while engaged with the one or more pickable workpieces for placing the one or more pickable workpieces in the desired position and desired orientation.

7. The method of any one of claims 1 to 6, comprising operating the processor to select the end-of-arm-tooling component from amongst a plurality of end-of-arm-tooling components of the pick-and-place robot; and/or
wherein the loading area comprises a first loading area and a second loading area; and
the method comprises:
capturing, by the imaging device, an initial image of a first set of the one or more workpieces loaded onto the first loading area and a second image of a second set of the one or more workpieces loaded onto the second loading area; and
operating the end-of-arm-tooling component to retrieve the one or more pickable workpieces from the first set of the one or more workpieces loaded onto the first loading area while operating the processor to apply the machine learning to the second image to identify one or more pickable workpieces from the second set of one or more workpieces loaded onto the second loading area.

8. The method of any one of claims 1 to 7, wherein:
the loading area is moveable between an imaging location and a picking location; and
the method comprises maintaining the loading area at the imaging location while the imaging device captures the initial image and moving the loading area to the picking location prior to operating the end-of-arm-tooling component to engage the one or more pickable workpieces; and/or
the method further comprises, repeatedly,
capturing an additional image of the one or more of workpieces loaded onto the loading area;
operating the processor to:
apply the machine-learning model to the additional image to identify one pickable workpiece from the one or more workpieces;
identify a region of interest within the additional image, the region of interest comprising an engagement portion of the one pickable workpiece; and
based on the additional image, define a set of operating parameters for operating the end-of-arm-tooling component to retrieve the one pickable workpiece; and
operating the end-of-arm-tooling component to retrieve the one pickable workpiece from the loading area and transfer the one pickable workpiece to the receiving area according to the set of operating parameters; and/or
the method further comprises operating the processor to:
apply the machine-learning model to the initial image to identify a plurality of pickable workpieces from the one or more workpieces;
identify a region of interest within the initial image, the region of interest comprising an engagement portion of the first pickable workpiece for the end-of-arm-tooling component to engage the first pickable workpiece; and
based on the initial image, define a first set of operating parameters for operating the end-of-arm-tooling component to retrieve the first pickable workpiece; and
after operating the end-of-arm-tooling component to retrieve the first pickable workpiece from the loading area,
capturing a second image of the one or more of workpieces loaded onto the loading area; and
operating the processor to:
compare the second image to the initial image to identify a second pickable workpiece in the second image corresponding to a workpiece identified as being pickable in the initial image;
identify a region of interest within the second image, the region of interest comprising an engagement portion of the second pickable workpiece for the end-of-arm-tooling component to engage the second pickable workpiece; and
based on the second image, define a second set of operating parameters for operating the end-of-arm-tooling component to retrieve the second pickable workpiece; and
operating the end-of-arm-tooling component to retrieve the second pickable workpiece from the loading area and transfer the second pickable workpiece to the receiving area based on the second set of operating parameters.

9. A system to transfer a plurality of workpieces, the system comprising:
an imaging device operable to capture an initial image of one or more workpieces loaded onto a loading area;
an autonomous pick-and-place robot comprising an end-of-arm-tooling component operable to retrieve one or more pickable workpieces from the loading area and transfer the one or more pickable workpieces to a receiving area according to a set of operating parameters; and
a processor in communication with the imaging device and the pick-and-place robot, the processor operable to:
apply a machine-learning model to the initial image to identify the one or more pickable workpieces from the one or more workpieces, the machine-learning model being generated based on a set of training images in which one or more related workpieces were identified as pickable based on one or more of a position and an orientation of each related workpiece shown within a training image of the set of training images;
identify a region of interest within the initial image, the region of interest comprising an engagement portion of the one or more pickable workpieces for the end-of-arm-tooling component of the pick-and-place robot to engage the one or more pickable workpieces; and
based on the initial image, define the set of operating parameters for operating the end-of-arm-tooling component to retrieve the one or more pickable workpieces, the set of operating parameters comprising a first approach path defining a path along which the end-of-arm-tooling component moves towards the engagement portion of the one or more pickable workpieces loaded on the loading area.

10. The system of claim 9, wherein:
the processor is operable to:
identify a feature of a workpiece of the one or more workpieces shown in the initial image corresponding to a pre-determined position feature; and
extract position data for the workpiece based on the feature identified as corresponding to the pre-determined position feature, the position data being representative of the position of the workpiece; and/or
the processor is operable to:
identify a feature of a workpiece of the one or more workpieces shown in the initial image corresponding to a pre-determined orientation feature; and
extract orientation data for the workpiece based on the feature identified as corresponding to the pre-determined orientation feature, the orientation data being representative of the orientation of the workpiece; and
optionally, the set of operating parameters further comprise a first retract path defining a path along which the end-of-arm-tooling component moves away from the loading area while engaged with the one or more pickable workpieces

11. The system of any one of claims 9 to 10, wherein:
the set of operating parameters further comprise a first approach angle defining an angle at which the end-of-arm-tooling component moves towards the engagement portion of the one or more pickable workpieces; and
optionally, the set of operating parameters further comprise a first retract angle defining an angle at which the end-of-arm-tooling component moves away from the loading area while engaged with the one or more pickable workpieces.

12. The system of any one of claims 9 to 11, wherein:
the end-of-arm-tooling component comprises a vacuum having a vacuum cup size; and the engagement portion of the one or more pickable workpieces comprises a surface area that can accommodate the vacuum cup size.

13. The system of any one of claims 9 to 12, wherein:
the end-of-arm-tooling component comprises a gripper having a gripper size and a gripper stroke; and the engagement portion of the one or more pickable workpieces comprises edge portions that can accommodate the gripper size and gripper stroke; and
optionally, the processor is operable to: determine a clear space around a workpiece of the one or more workpieces; and identify pickable workpieces further based on the clear space around the workpiece, the gripper size, and the gripper stroke.

14. The system of any one of claims 9 to 13, wherein:
the end-of-arm-tooling component is operable to place the one or more pickable workpieces in a desired position and a desired orientation on the receiving area; and
the set of operating parameters further comprise a second approach path defining a path along which the end-of-arm-tooling component with the one or more pickable workpieces engaged therein moves towards from the receiving area for placing the one or more pickable workpieces in the desired position and desired orientation; and
optionally, wherein the set of operating parameters further comprise a second approach angle defining an angle at which the end-of-arm-tooling component moves towards the receiving area while engaged with the one or more pickable workpieces for placing the one or more pickable workpieces in the desired position and desired orientation.

15. The system of any one of claims 9 to 14, wherein the processor is operable to select the end-of-arm-tooling component from amongst a plurality of end-of-arm-tooling components of the pick-and-place robot; and/or
wherein the loading area comprises a first loading area and a second loading area;
the imaging device is operable to capture an initial image of a first set of the one or more workpieces loaded onto the first loading area and a second image of a second set of the one or more workpieces loaded onto the second loading area; and
the end-of-arm-tooling component is operable to retrieve the one or more pickable workpieces from the first set of the one or more workpieces loaded onto the first loading area while the processor is operated to apply the machine learning to the second image to identify one or more pickable workpieces from the second set of one or more workpieces loaded onto the second loading area; and/or
wherein the loading area is moveable between an imaging location and a picking location; and
the loading area is operable to remain at the imaging location while the imaging device captures the initial image and move to the picking location prior to operating the end-of-arm-tooling component to engage the one or more pickable workpieces; and/or
wherein the imaging device is operable to capture additional images of the one or more of workpieces loaded onto the loading area; and for each additional image,
the processor is operable to:
apply the machine-learning model to the additional image to identify one pickable workpiece from the one or more workpieces;
identify a region of interest within the additional image, the region of interest comprising an engagement portion of the one pickable workpiece; and
based on the additional image, define a set of operating parameters for operating the end-of-arm-tooling component to retrieve the one pickable workpiece; and
the end-of-arm-tooling component is operable to retrieve the one pickable workpiece from the loading area and transfer the one pickable workpiece to the receiving area according to the set of operating parameters; and/or
wherein the processor is operable to:
apply the machine-learning model to the initial image to identify a plurality of pickable workpieces from the one or more workpieces;
identify a region of interest within the initial image, the region of interest comprising an engagement portion of a first pickable workpiece for the end-of-arm-tooling component to engage the first pickable workpiece; and
based on the initial image, define a first set of operating parameters for operating the end-of-arm-tooling component to retrieve the first pickable workpiece;
the imaging device is operable to capture a second image of the one or more of workpieces loaded onto the loading area after the end-of-arm-tooling component retrieves the first pickable workpiece from the loading area;
the processor is further operable to:
compare the second image to the initial image to identify a second pickable workpiece in the second image corresponding to a workpiece identified as being pickable in the initial image;
identify a region of interest within the second image, the region of interest comprising an engagement portion of the second pickable workpiece for the end-of-arm-tooling component to engage the second pickable workpiece;
based on the second image, define a second set of operating parameters for operating the end-of-arm-tooling component to retrieve the second pickable workpiece; and
the end-of-arm-tooling component is operable to retrieve the second pickable workpiece from the loading area and transfer the second pickable workpiece to the receiving area based on the second set of operating parameters.
